(19) Europäisches Patentamt

European Patent Office

Office européen des brevets

(11) **EP 0 486 336 B2**

(12) **NOUVEAU FASCICULE DE BREVET EUROPEEN**

(45) Date de publication et mention de la décision concernant l'opposition:
**19.08.1998 Bulletin 1998/34**

(45) Mention de la délivrance du brevet:
**09.08.1995 Bulletin 1995/32**

(51) Int. Cl.$^6$: **C04B 38/00**, C04B 35/56,
F16C 33/04

(21) Numéro de dépôt: **91402736.2**

(22) Date de dépôt: **14.10.1991**

(54) **Corps fritté en carbure de silicium notamment pour garniture mécanique et garniture comportant un tel corps fritté**

Sinterkörper aus Siliciumcarbid, insbesondere für Gleitringe und einen solchen Sinterkörper enthaltender Gleitring

Silicon carbide sintered body especially for sliding rings and sliding ring containing such a sintered body

(84) Etats contractants désignés:
**BE CH DE DK ES FR GB IT LI LU NL SE**

(30) Priorité: **17.10.1990 FR 9012783**

(43) Date de publication de la demande:
**20.05.1992 Bulletin 1992/21**

(73) Titulaire:
**CERAMIQUES & COMPOSITES SA.**
**65460 Bazet (FR)**

(72) Inventeurs:
• **Azema, Olivier**
**F-65000 Tarbes (FR)**
• **Bougoin, Michel**
**F-65800 Aureilhan (FR)**

(74) Mandataire:
**Schrimpf, Robert et al**
**Cabinet Regimbeau**
**26, Avenue Kléber**
**75116 Paris (FR)**

(56) Documents cités:
JP-A-62 176 970          JP-A-62 270 481
JP-A-63 221 680          US-A- 4 756 895
US-A- 4 777 153

• CHEMICAL ABSTRACTS, vol. 107, no. 16, 19 octobre 1987, abrégé no. 139606y, Columbus, Ohio, US; & JP-A-62 138 377 (IBIDEN CO., LTD) 22-06-1987
• CHEMICAL ABSTRACTS, vol. 110, no. 5, 15 mai 1989, page 325, abrégé no. 178331m, Columbus, Ohio, US; & JP-A-63 265 850 (BROTHER INDUSTRIES, LTD) 02-11-1988

Remarques:
Le dossier contient des informations techniques présentées postérieurement au dépôt de la demande et ne figurant pas dans le présent fascicule.

## Description

La présente invention concerne un corps fritté en carbure de silicium notamment pour garniture mécanique et une garniture comportant un tel corps fritté.

On a déjà utilisé des matériaux à base de carbone de silicium pour réaliser des pièces de glissement : le brevet japonais JP-A-62 138377 propose un composite constitué d'un carbure de silicium à haute porosité ouverte dans les pores duquel on introduit sous pression un lubrifiant avant une opération finale de séchage. D'autre part, la demande de brevet EP 0 361 326 propose une structure constituée de carbure de silicium imprégné de silicium contenant des particules de carbone, dans laquelle on réalise une surface de glissement puis on confère à cette surface une porosité superficielle par oxydation à très haute température sur une profondeur inférieure à 500μm correspondant à la dimension des pores.

Les garnitures mécaniques sont des montages bien connus comprenant deux bagues en glissement l'une sur l'autre pour faire joint d'étanchéité d'arbre rotatif de pompe sur des moteurs d'automobiles par exemple.

Pour ces garnitures, on utilise de plus en plus des bagues en matériaux céramique et par exemple des associations carbure de silicium fritté pour une bague et matériau à base de carbone, notamment de graphite pour la contre-bague.

Un problème important pour ce type de matériau est l'usure des bagues en glissement. En effet, si l'usure est trop prononcée, il risque de se produire, notamment sur la contre-bague à base de carbone, des éclats en surface.

On peut aussi voir apparaître des irrégularités ou des défauts sur cette même surface dont la planéité va ainsi être diminuée.

Ces défauts de surface ont bien entendu pour conséquence une diminution de l'étanchéité du système, ce qui provoque des fuites de liquide.

L'objet de l'invention est donc la mise au point d'un matériau en carbure de silicium utilisable dans des garnitures mécaniques et pouvant conférer à celle-ci une résistance à l'usure améliorée, tout particulièrement pour des vitesses de rotation élevées.

Dans ce but, l'invention propose un corps fritté à base de carbure de silicium exempt de silicium imprégné comme indiqué à la revendication 1.

On a pu constater après des essais de longues durées (1000 heures) et pour des vitesses de rotation élevées une très bonne étanchéité des garnitures utilisant les corps frittés de l'invention.

D'autres caractéristiques et détails de l'invention apparaitront plus clairement à la lecture de la description qui va suivre.

Le corps fritté de l'invention est à base de carbure de silicium (SiC). On peut utiliser le SiC α ou le SiC β ou encore des combinaisons de ces deux polytypes dans des proportions quelconques.

Dans la composition du corps fritté peut bien entendu entrer, outre le SiC, tous les additifs habituels et bien connus de frittage, comme par exemple le carbone, le bore, l'aluminium.

Il faut aussi noter que l'invention s'applique aussi aux corps frittés du type composite, c'est-à-dire comprenant du SiC et en outre du carbone libre en particulier sous forme graphite.

Ainsi, on peut envisager des composites comprenant jusqu'à 48% en poids de carbone libre, notamment jusqu'à 20% et plus particulièrement jusqu'à 10%, ce carbone pouvant se présenter sous forme d'un mélange carbone amorphe - carbone graphite dans des proportions quelconques.

Ces corps du type composite à base de graphite sont particulièrement intéressants car ils possèdent des propriétés lubrifiantes améliorées par diminution du coefficient de frottement.

Enfin, le corps fritté est à base d'un SiC dont la taille des grains est généralement comprise entre 1 et 500μm, et de préférence entre 1 et 20μm.

L'une des caractéristiques principales du corps fritté en SiC selon l'invention est qu'il s'agit d'un corps poreux de diamètre moyen de pores bien spécifique.

Ce diamètre moyen est celui obtenu sur la base de valeurs mesurées par examen au microscope électronique à balayage.

Selon l'invention, ce diamètre doit être compris entre 60 et 200μm.

On s'est aperçu que pour un diamètre moyen de pores inférieur à 60μm on observait une usure élevée au moins sur la contrebague de la garniture mécanique.

Par ailleurs ou-delà d'un diamètre moyen de 200μm, les pores deviennent trop gros et le corps fritté présente une résistance mécanique diminuée.

Il est préférable d'une manière générale d'avoir une valeur maximale du diamètre de pores de 150μm, et donc de se situer dans la gamme 60 - 150μm.

C'est ainsi que selon différentes variantes de l'invention, on pourra envisager des corps frittés présentant un diamètre moyen de pores compris entre 60 et 200μm, et plus particulièrement 60 et 150μm et encore plus particulièrement 60 et 100μm.

EP 0 486 336 B2

Les pores du corps selon l'invention se présentent sous une forme sphérique ou sous une forme voisine de la sphère. Cette forme permet d'atteindre des porosités élevées en assurant une étanchéité totale du corps.

D'autre part, ces pores sont essentiellement des pores fermés.

La porosité du corps fritté selon l'invention est comprise entre 4 et 18%.

On entend par à la porosité totale, c'est-à-dire celle prenant en compte les pores ouverts et fermés. Cette porosité (P) est donnée par la formule

$$P = 100 - d \left[ \frac{x}{2,25} + \frac{100 - x}{3,21} \right]$$

d étant la masse volumique apparente du corps et x étant le pourcentage massique de carbone libre contenu dans le matériau; 2,25 étant la masse volumique du carbone libre et 3,21 celle du carbure de silicium.

Si la porosité est inférieure à 4%, on a un corps en SiC qui n'apporte pas d'amélioration à la résistance à l'usure de la garniture mécanique. Au-delà de 18%, l'étanchéité n'est plus assurée, la résistance mécanique est aussi trop faible.

De préférence, cette porosité est comprise entre 5 et 15% et plus particulièrement 8 et 15%.

Le corps fritté de l'invention peut être obtenu par un procédé qui consiste à ajouter un matériau porogène sous forme de microbilles ou de granulés au mélange des produits destinés à la préparation du carbure de silicium fritté.

La mise en oeuvre du matériau porogène peut se faire de plusieurs manières. Par exemple, on peut former dans un broyeur a boulets une barbotine à base de SiC, des additifs de frittage et d'un liant dans l'eau ou dans un solvant organique. A cette barbotine, on ajoute ensuite sous agitation le matériau porogène. On sèche enfin par atomisation.

Un autre procédé consiste à former puis à sécher une barbotine du type décrit ci-dessus, mais sans le matériau porogène. Au produit sec ainsi obtenu, on mélange alors à sec le matériau porogène.

Les matériaux porogènes utilisables sont bien connus. Ce sont généralement des matériaux organiques du type polymère. On utilise de préférence des produits obtenus à partir d'une polymérisation en émulsion. Ces matériaux ne doivent pas être solubles dans l'eau ou le solvant organique utilisé dans la composition de la barbotine. Ils doivent aussi pouvoir supporter thermiquement le séchage par atomisation notamment.

On peut citer comme exemple le polystyrène, le polyméthacrylate de méthyle, le polyamide.

Le produit séché obtenu est enfin mis en forme par exemple par pressage isostatique ou uniaxial pour donner une pièce crue. La mise en forme peut aussi se faire par coulage ou extrusion.

Cette pièce crue est frittée d'une manière connue en soi.

Généralement, la température de frittage se situe entre 1900 et 2500°C et plus particulièrement entre 2000 et 2200°C. On procède sous vide et/ou sous une atmosphère d'un gaz type argon, monoxyde ou dioxyde de carbone, hélium, hydrogène, azote par exemple.

L'invention concerne aussi les garnitures mécaniques comportant une bague fixe et une bague rotative dont au moins une est constituée du corps fritté tel qu'il vient d'être décrit plus haut.

L'autre bague peut être réalisée dans un matériau à base de carbone et notamment en carbone imprégné de résine. Ce matériau peut aussi être en carbure de silicium ou en nitrure de silicium; ce peut être aussi un corps en alumine frittée. Ce peut encore être un matériau de type métallique par exemple acier au carbone.

On peut enfin mettre en oeuvre une garniture dans laquelle les deux bagues seraient constituées du corps fritté selon l'invention.

Le corps fritté de l'invention peut être aussi utilisé dans des paliers.

Bien entendu, le corps fritté de l'invention peut être utilisé dans d'autres applications que les garnitures mécaniques.

Ainsi, il peut servir dans tout système frottant du type par exemple butée, palier ou glissière comportant au moins une pièce en frottement constituée par ledit corps ou dont une partie est constituée dudit corps. On peut ainsi l'employer par exemple dans des paliers et dans les configurations suivantes : alésage SiC - arbre métallique, alésage SiC - arbre SiC, alésage SiC - arbre métallique avec chemise SiC ou graphite.

Un exemple va maintenant être donné.

EXEMPLE 1

Préparation des bagues

On forme deux barbotines à 60% d'extrait sec dans l'eau comprenant des matières minérales, une résine phénolique apportant du carbone après pyrolyse et 3% de polyéthylène glycol.

Les proportions des constituants de la barbotine sont les suivantes en parties en poids :

|  | Barbotine 1 | Barbotine 2 |
|---|---|---|
| SiC | 99 | 99 |
| B | 1 | 1 |
| Agent porogène : |  |  |
| PLEXIGUM M 914 | 6 | - |
| ORGASOL 2002 ES 3 | - | 1,6 |
| Carbone ("ex résine phénolique") | 1,5 | 1,5 |

Le PLEXIGUM M 914 est un polyméthacrylate de méthyle de taille moyenne des grains de 90µm. L'ORGASOL 2002 ES 3 est un polyamide de taille moyenne des grains de 30µm.

Le carbone de silicium présente une surface spécifique de $12m^2$/g et un diamètre moyen de 1,3µm.

Les porogènes ont été mélangés à la barbotine sous agitation.

Les barbotines sont ensuite séchées par atomisation.

Les poudres obtenues sont alors pressées à 1500 bars pour donner des pièces crues. Après un traitement thermique sous azote jusqu'à 600°C qui permet notamment l'élimination du porogène, celles-ci sont ensuite frittées à 2070°C sous argon pendant 1 heure.

On obtient une bague 1 (issue de la première barbotine) selon l'invention et une bague 2 (issue de la seconde barbotine) qui sert de comparaison. Les caractéristiques des produits sont données ci-dessous :

| Bague | 1 | 2 |
|---|---|---|
| Porosité totale % | 14,3 | 5,3 |
| Diamètre moyen des pores (µm) | 80 | 25 |
| Masse volumique apparente g/$cm^3$ | 2,75 | 3,04 |

Essais

On teste les bagues 1 et 2 comme bague de glissement rotative dans une garniture mécanique. La contre-bague de glissement fixe est en carbone graphite.

Les conditions de l'essai sont les suivantes :

- température : 130°C
- fluide : antigel pur
- vitesse de rotation : 6700 T/min.
- Pression : 1 bar
- Durée de l'essai : 1000 heures.

Dans le cas de la garniture montée avec la bague 2, on observe après l'essai de fortes ondulations sur la surface de la contre-bague. Ces ondulations ont une hauteur pouvant atteindre 0,8 à 1,2µm.

Dans le cas de la bague 1 selon l'invention, les ondulations sur la contre-bague sont par contre très faibles, c'est-à-dire qu'elles présentent une hauteur d'au plus 0,1µm.

Après un test en étanchéité statique à 20 bars, la bague 1 est étanche, ce qui montre que la porosité est entièrement fermée.

EXEMPLE 2

On forme une barbotine à 60% d'extrait sec dans l'eau comprenant des matières minérales, une résine phénolique apportant du carbone après pyrolyse, 3% de polyéthylène glycol ainsi qu'un agent porogène PLEXIGUM M 820.

4

Les proportions des constituants de la barbotine sont les suivantes en parties en poids :

| SiC | 96,37 |
|---|---|
| $B_4C$ | 0,63 |
| Carbone graphite | 3,00 |
| Agent porogène | 4,1 |
| Carbone "ex résine phénolique | 1,5 |

Le "PLEXIGUM M820" est un polymétacrylate de méthyle dont la taille moyenne des grains est de $75\mu m$.

Le graphite utilisé est la nuance KS6 de LONZA dont la surface spécifique est de 20 $m^2/g$ et le diamètre moyen d'environ $3,5\mu m$.

Le carbure de silicium est le même qu'à l'exemple 1.

Le porogène est mélangé à la barbotine sous agitation.

La barbotine est ensuite séchée par atomisation.

Les granulés obtenus sont alors pressés à 1500 bars pour donner une pièce crue. Après traitement thermique sous azote à 600°C, qui permet l'élimination du porogène et la conversion de la résine phénolique en carbone, la pièce est ensuite frittée à 2070°C sous argon, pendant 1 heure.

On obtient un matériau composite $SiC\alpha$/graphite dont les caractéristiques sont données ci-dessous :

| Porosité totale (%) | 10,7 |
|---|---|
| Diamètre moyen des pores ($\mu m$) | 65 |
| Masse volumique apparente (g.cm$^{-3}$) | 2,83 |
| Masse volumique théorique hors porosités (g.cm$^{-3}$) | 3,17 |

**Revendications**

1. Corps fritté à base de carbure de silicium exempt de silicium imprégné, caractérisé en ce qu'il présente des pores essentiellement fermés, sous une forme voisine de la sphère, dont le diamètre moyen est compris entre 60 et 200 $\mu m$ et une porosité totale comprise entre 4 et 18 %.

2. Corps fritté selon la revendication 1, caractérisé en ce que le diamètre moyen des pores est compris entre 60 et 150 $\mu m$.

3. Corps fritté selon la revendication 2, caractérisé en ce que le diamètre moyen des pores est compris entre 60 et 100 $\mu m$.

4. Corps fritté selon l'une des revendications précédentes, caractérisé en ce qu'il présente une porosité comprise entre 5 et 15 %.

5. Corps fritté selon la revendication 4, caractérisé en ce qu'il présente une porosité comprise entre 8 et 15 %.

6. Corps fritté à base de carbure de silicium selon l'une des revendications précédentes, caractérisé en ce qu'il comprend en outre du carbone libre, ce carbone libre pouvant se présenter sous forme graphite.

7. Garniture mécanique comportant une bague fixe et une bague rotative, caractérisé en ce qu'au moins une des bagues est constituée du corps fritté selon l'une des revendications 1 à 6.

8. Dispositif de butée, palier ou glissière, comportant au moins une pièce en frottement constituée par un corps selon l'une des revendications 1 à 6 ou dont une partie est constituée dudit corps.

**Claims**

1. Sintered body based on silicon carbide which is free from impregnated silicon, characterised in that it has pores which are substantially closed, in a form close to the sphere, the average diameter of which is between 60 and 200 $\mu$m, and a total porosity between 4 and 18%.

2. Sintered body according to claim 1, characterised in that the average diameter of the pores is between 60 and 150 $\mu$m.

3. Sintered body according to claim 2, characterised in that the average diameter of the pores is between 60 and 100 Mm.

4. Sintered body according to one of the preceding claims, characterised in that it has a porosity between 5 and 15%.

5. Sintered body according to claim 4, characterised in that it has a porosity between 8 and 15%.

6. Sintered body based on silicon carbide according to one of the preceding claims, characterised in that it additionally comprises free carbon, it being possible for this free carbon to be in graphite form.

7. Mechanical packing comprising a stationary ring and a rotary ring, characterised in that at least one of the rings consists of the sintered body according to one of claims 1 to 6.

8. Device of the thrust block, bearing or slide type, comprising at least one friction part consisting of a body according to one of claims 1 to 6 or part of which consists of the said body.

**Patentansprüche**

1. Sinterkörper auf Siliciumcarbid-Basis, der frei von imprägniertem Silicium ist, dadurch gekennzeichnet, daß er im wesentlichen geschlossene Poren in einer näherungsweise kugeligen Form mit einem mittleren Durchmesser zwischen 60 und 200 $\mu$m und eine Gesamtporosität zwischen 4 und 18 % aufweist.

2. Sinterkörper nach Anspruch 1, dadurch gekennzeichnet, daß der mittlere Durchmesser der Poren zwischen 60 und 150 $\mu$m liegt.

3. Sinterkörper nach Anspruch 2, dadurch gekennzeichnet, daß der mittlere Durchmesser der Poren zwischen 60 und 100 $\mu$m liegt.

4. Sinterkörper nach einem der vorhergehenden Ansprüche, dadurch gekennzeichnet, daß er eine Porosität zwischen 5 und 15 % aufweist.

5. Sinterkörper nach Anspruch 4, dadurch gekennzeichnet, daß er eine Porosität zwischen 8 und 15 % aufweist.

6. Sinterkörper auf Siliciumcarbid-Basis nach einem der vorhergehenden Ansprüche, dadurch gekennzeichnet, daß er außerdem freien Kohlenstoff enthält, der in Form von Graphit vorliegen kann.

7. Mechanische Einrichtung (Dichtung; Armatur), die einen festen Ring und einen drehbaren Ring umfaßt, dadurch gekennzeichnet, daß mindestens einer der Ringe aus dem Sinterkörper nach einem der Ansprüche 1 bis 6 besteht.

8. Einrichtung vom Widerlager-, Radiallager- oder Gleitlager-Typ, die mindestens ein Gleitstück aufweist, das aus einem Sinterkörper nach einem der Ansprüche 1 bis 6 besteht oder zum Teil aus dem genannten Sinterkörper besteht.